# EUROPÄISCHE PATENTSCHRIFT

(11) **EP 0 865 674 B1**
(45) Veröffentlichungstag und Bekanntmachung des Hinweises auf die Patenterteilung: **14.02.2001**
(21) Anmeldenummer: 96946004.7
(22) Anmeldetag: 21.11.1996
(51) Int. Cl.: H01M 8/06, H01M 8/04

(54) **VERFAHREN ZUM BETREIBEN EINER HOCHTEMPERATUR-BRENNSTOFFZELLENANLAGE UND HOCHTEMPERATUR-BRENNSTOFFZELLENANLAGE**
METHOD OF OPERATING A HIGH-TEMPERATURE FUEL CELL SYSTEM AND HIGH-TEMPERATURE FUEL CELL SYSTEM
PROCEDE PERMETTANT DE FAIRE FONCTIONNER UNE INSTALLATION A PILE A COMBUSTIBLE A HAUTE TEMPERATURE, ET INSTALLATION A PILE A COMBUSTIBLE A HAUTE TEMPERATURE

(30) Priorität: 04.12.1995 DE 19545186
(43) Veröffentlichungstag der Anmeldung: 23.09.1998
(73) Patentinhaber: SIEMENS AKTIENGESELLSCHAFT, 80333 München (DE)
(72) Erfinder: VOLLMAR, Horst, D-91074 Herzogenaurach (DE); EDELMANN, Heiner, D-91085 Weisendorf (DE); SCHREPFER, Wolfgang, D-91074 Herzogenaurach (DE); NÖLSCHER, Christoph, D-90419 Nürnberg (DE)
(86) Internationale Anmeldenummer: DE9602237
(87) Internationale Veröffentlichungsnummer: WO9721257

(56) Entgegenhaltungen:
- EP-A- 0 246 649
- EP-A- 0 401 834
- EP-A- 0 404 712
- EP-A- 0 473 153
- EP-A- 0 673 074
- US-A- 4 772 634
- US-A- 5 034 287
- PATENT ABSTRACTS OF JAPAN vol. 011, no. 367 (E-561), 28.November 1987 & JP 62 140375 A (HITACHI LTD), 23.Juni 1987,
- PATENT ABSTRACTS OF JAPAN vol. 013, no. 295 (E-783), 7.Juli 1989 & JP 01 076676 A (KAWASAKI HEAVY IND LTD), 22.März 1989,
- PATENT ABSTRACTS OF JAPAN vol. 016, no. 364 (E-1244), 6.August 1992 & JP 04 115466 A (KAWASAKI HEAVY IND LTD), 16.April 1992,
- EXTENDED ABSTRACTS SPRING MEETING 1993 MAY 16-21, HONOLULU PENNINGTON, NJ US, Bd. 93/1, 1993, Seite 1507 XP000421773 MIYAKE Y ET AL: "DEVELOPMENT OF INTERNAL REFORMING MCFC WITH PETROLEUM LIGHT FUELS"
- PATENT ABSTRACTS OF JAPAN vol. 013, no. 396 (E-815), 4.September 1989 & JP 01 143154 A (ISHIKAWAJIMA HARIMA HEAVY IND CO LTD), 5.Juni 1989,

## Beschreibung

Die Erfindung bezieht sich auf ein Verfahren zum Betreiben einer Hochtemperatur-Brennstoffzellenanlage und Hochtemperatur-Brennstoffzellenanlage.

Zum Betreiben einer Hochtemperatur-Brennstoffzellenanlage werden kohlenwasserstoffhaltige Brennstoffe, beispielsweise Erdgas, Heizöl, Naphta oder Biogas, verwendet. Diese Brennstoffe müssen in der Regel für den Betrieb der zu Hochtemperatur-Brennstoffzellenmodulen zusammengefaßten Hochtemperatur-Brennstoffzellen in geeigneter Weise aufbereitet, d. h. reformiert werden.

Die kohlenwasserstoffhaltigen Brennstoffe durchlaufen dabei vor der elektrochemischen Reaktion in dem Hochtemperatur-Brennstoffzellenmodul nach einer Befeuchtung einen Reformierungsprozeß, bei dem als gasförmige Reformationsprodukte CO, H₂, CO₂ und H₂O entstehen. Die auch als Reformat bezeichneten gasförmigen Reformationsprodukte bilden nunmehr das geeignete Brenngas für den Betrieb des Hochtemperatur-Brennstoffzellenmoduls.

Der Prozeß der Reformierung kann dabei extern oder intern, d. h. außerhalb oder innerhalb des Hochtemperatur-Brennstoffzellenmoduls, mit oder ohne Nutzung des Wärmeinhaltes eines Anodenabgases des Hochtemperatur-Brennstoffzellenmoduls erfolgen.

Eine interne Reformierung ist beispielsweise aus dem Bericht "Verfahrenstechnik der Hochtemperaturbrennstoffzelle" von E. Riensche, VDI-Berichte 1174 (1995), Seiten 63 bis 78, bekannt, bei der die Abwärme mit großem Wärmeinhalt, welche bei der elektrochemischen Verbrennung in dem Hochtemperatur-Brennstoffzellenmodul entsteht, für die interne Reformierung des Brenngases verwendet wird. Erfolgt die Reformierung in dem Hochtemperatur-Brennstoffzellenmodul aber außerhalb eines Anodenteils, so wird dies als indirekte interne Reformierung bezeichnet. Eine Reformierung im Anodenteil wird dementsprechend direkte interne Reformierung genannt.

Die für einen externen Reformierungsprozeß aus dem Stand der Technik, insbesondere aus dem Bericht "Erzeugung und Konditionierung von Gasen für den Einsatz in Brennstoffzellen", von K.H. van Heek, VDI-Berichte 1174 (1995), Seiten 97 bis 116, bekannten externen Reformer sind so ausgelegt und konstruiert, daß gerade soviel Brenngas reformiert wird, wie für den Umsatz in dem Hochtemperatur-Brennstoffzellenmodul für die elektrochemische Verbrennung benötigt wird. Diese Auslegung gilt ebenfalls bei direkter bzw. indirekter interner Reformierung.

Weitere Brennstoffzellenanlagen, die jeweils aus wenigstens einem aus Einzelzellen zusammengesetzten Brennstoffzellenstapel bestehen, d. h. einen modulartigen Aufbau besitzen, und einen Anoden- und einen Kathodenteil aufweisen, wobei das für die elektrochemische Reaktion erforderliche Brenngas mittels eines Reformierungsprozesses erzeugt wird, sind aus den Deutschen Offenlegungsschriften 43 30 623 und 40 32 652 sowie aus der Europäischen Patentanmeldung 0 430 017 bekannt.

Die aus dem Stand der Technik bekannten Hochtemperatur-Brennstoffzellenanlagen sind somit für eine optimal hohe Brenngasausnutzung in der elektrochemischen Reaktion ausgelegt. Das reformierte Brenngas wird somit ausschließlich zum Zwecke der Nutzung innerhalb der Hochtemperatur-Brennstoffzellenanlage verwendet.

Durch diese Auslegung existiert ein Konzentrationsgefälle des Brenngases über die gesamte aktive Fläche für die elektrochemische Reaktion innerhalb des Hochtemperatur-Brennstoffzellenmoduls. Diese Abreicherung des Brenngases über die aktive Fläche bis zum Ausgang des Hochtemperatur-Brennstoffzellenmoduls kann bis zu 80-90% betragen. Infolge dieser Abreicherung kommt es zu einer Diffusionshemmung innerhalb des Elektrolyten des Hochtemperatur-Brennstoffzellenmoduls, was wiederum zu erheblichen Einbußen der Leistungsdichte des Hochtemperatur-Brennstoffzellenmoduls führt.

Der Erfindung liegt somit die Aufgabe zugrunde, ein Verfahren zum Betreiben einer Hochtemperatur-Brennstoffzellenanlage anzugeben, bei dem die Effektivität einer Hochtemperatur-Brennstoffzellenanlage optimiert wird. Außerdem sollen Hochtemperatur-Brennstoffzellenanlagen zur Durchführung des Verfahrens angegeben werden.

Die erstgenannte Aufgabe wird gemäß der Erfindung gelöst durch ein Verfahren zum Betreiben einer Hochtemperatur-Brennstoffzellenanlage, bei dem der Wärmeinhalt aus der elektrochemischen Reaktion im Hochtemperatur-Brennstoffzellenmodul im wesentlichen zur Erzeugung des für die elektrochemische Reaktion erforderlichen Wasserstoff, sowie für weiteren Wasserstoff, der für eine weitere Nutzung außerhalb des Hochtemperatur-Brennstoffzellenmoduls vorgesehen ist, durch einen Reformierungsprozeß des Brenngases verwendet wird, wobei die Zellen des Hochtemperatur-Brennstoffzellenmoduls jeweils mit einer Zellspannung kleiner 0,8 Volt betrieben werden.

Die zweitgenannte Aufgabe wird gemäß der Erfindung gelöst durch eine Hochtemperatur-Brennstoffzellenanlage, die wenigstens ein Hochtemperatur-Brennstoffzellenmodul mit einem Anodenteil, einem Kathodenteil, einen Reformer zum Reformieren des Brenngas für die elektrochemische Reaktion und eine Wasserstoffabtrennvorrichtung in einem Abweg des Anodenteils, die zum Abtrennen von Wasserstoff aus dem Anodenabgas vorgesehen ist, umfaßt, bei der Mittel zur Zuleitung der im wesentlichen gesamten im Hochtemperatur-Brennstoffzellenmodul erzeugten Wärme zum Reformer vorgesehen sind, und der Reformer dazu ausgelegt ist, mehr Wasserstoff zu erzeugen, als für die elektrochemische Reaktion gebraucht wird.

Der aus der Reformierung direkt entstandene überschüssige Wasserstoff H₂ wird mit diesem Speicher beispielsweise weiteren mobilen oder stationären Anlagen, die Wasserstoff H₂ zum Betrieb benötigen, zugeführt. Außerdem kann der Wasserstoff H₂ direkt ohne Verwendung eines zusätzlichen Speichers in den Verbraucher eingespeist werden. Bei dem Verbraucher kann es sich beispielsweise um alle möglichen Verwendungen in verschiedenen Industriezweigen handeln, beispielsweise in der chemischen Industrie, bei denen Wasserstoff H₂ verwendet wird. Da die Hochtemperatur-Brennstoffzellenanlage den Speicher bzw. den Verbraucher bei der Auslegung des Wirkungsgrades umfaßt, wird somit die Effektivität, d. h. mit anderen Worten der Wirkungsgrad, der gesamten Hochtemperatur-Brennstoffzellenanlage verbessert.

Außerdem wird zugleich die Leistungsdichte des Hochtemperatur-Brennstoffzellenmoduls optimiert, da durch die hohe Konzentration des Brenngases über die gesamte aktive Fläche des Hochtemperatur-Brennstoffzellenmoduls die elektrische Leistungsdichte höher ist als bei den aus dem Stand der Technik bekannten Hochtemperatur-Brennstoffzellenanlagen, die auf eine hohe Brenngasausnutzung im Hochtemperatur-Brennstoffzellenmodul ausgelegt sind. Bei den bekannten Hochtemperatur-Brennstoffzellenanlagen existiert durch die Abreicherung des Brenngases, die bis hin zu einem Abweg des Anodenteils zwischen 80 und 90% betragen kann, eine Diffusionshemmung, die zu erheblichen Leistungseinbußen führt.

Außerdem muß bei dem Verfahren gemäß der Erfindung das Hochtemperatur-Brennstoffzellenmodul nicht auf einen hohen Zellwirkungsgrad ausgelegt werden. Es kann stattdessen eine unter Umständen deutlich niedrigere Zellspannung und damit eine wesentlich erhöhte Leistungsdichte als in einer auf Stromerzeugung optimierten Hochtemperatur-Brennstoffzellenanlage gewählt werden, beispielsweise 0,5 bis 0,7V Zellspannung anstatt 0,8V Zellspannung. Aufgrund dieser beiden Effekte ist also für eine vorgegebene elektrische Leistung weniger aktive Fläche notwendig, als bei bekannten Hochtemperatur-Brennstoffzellenanlagen. Die durch den bei erniedrigter Zellspannung verminderten elektrischen Wirkungsgrad entstehende erhöhte Abwärme kann dann beim vorliegenden Verfahren im wesentlichen für zusätzliche Reformierung verwendet werden. Durch diese Maßnahme kann eine Kühlung des Hochtemperatur-Brennstoffzellenmoduls, die im Stand der Technik mit bis zu 10facher Überschußluft durchgeführt wird, reduziert werden. Der Luftdurchsatz bleibt auf die für die elektrochemische Reaktion in dem Hochtemperatur-Brennstoffzellenmodul notwendige Menge begrenzt. Luftgebläse, Luftwärmetauscher und Luftkanäle werden entsprechend kleiner dimensioniert, wodurch der apparative Aufwand verringert und zusätzlich Kosten eingespart werden.

Vorzugsweise werden wenigstens 30% der Brenngasleistung zum Erzeugen des nicht verbrauchten Wasserstoffes H₂ verwendet.

Insbesondere wird der Wärmeinhalt aus der elektrochemischen Verbrennung im Hochtemperatur-Brennstoffzellenmodul zum Reformieren des Brenngases verwendet.

Insbesondere wird das Brenngas innerhalb des Hochtemperatur-Brennstoffzellenmoduls reformiert. Dadurch wird der Wärmeinhalt der elektrochemischen Verbrennung ohne zusätzliche externe Leitungen für eine Übertragung des Wärmeinhaltes direkt der Reformation zugeführt.

In einer weiteren Ausgestaltung wird das Brenngas vor dem Eintreten in das Hochtemperatur-Brennstoffzellenmodul reformiert. Ein außerhalb des Hochtemperatur-Brennstoffzellenmoduls angeordneter Reformer wird hierbei mit dem Wärmeinhalt eines Anodenabgases beheizt.

Vorzugsweise ist zum Reformieren des Brenngases für eine elektrochemische Reaktion ein innerhalb des Hochtemperatur-Brennstoffzellenmoduls angeordneter Reformer vorgesehen. Dieser interne Reformer ist wenigstens mit einem Teil seines Bereiches in dem die Reformierung stattfindet beispielsweise in dem Anodenteil des Hochtemperatur-Brennstoffzellenmoduls integriert. Durch diese Maßnahme entfällt ein externer Reformer, der nicht innerhalb des Hochtemperatur-Brennstoffzellenmoduls angeordnet ist.

Insbesondere ist wenigstens ein Wärmetauscher in dem Abweg des Anodenteils zur Übertragung des Wärmeinhaltes eines Anodenabgases über einen Zuweg an den innerhalb des Hochtemperatur-Brennstoffzellenmoduls angeordneten Reformer vorgesehen.

In einer weiteren Ausgestaltung ist ein Shift-Reaktor zur Erzeugung von Wasserstoff H₂ im Abweg des Anodenteils angeordnet. Durch den Shiftreaktor wird zusätzlicher Wasserstoff H₂ erzeugt.

Vorzugsweise ist der Shift-Reaktor zur Erzeugung von Wasserstoff H₂ zwischen den beiden Wärmetauschern in dem Abweg des Anodenteils angeordnet.

In einer weiteren Ausgestaltung ist wenigstens ein Wärmetauscher in einem Abweg des Kathodenteils zur Abgabe des Wärmeinhaltes eines Kathodenabgases vorgesehen.

Vorzugsweise ist ein Reformer außerhalb des Hochtemperatur-Brennstoffzellenmoduls in einem Zuweg für den Anodenteil angeordnet.

Insbesondere ist ein Abweg des Kathodenteils zur Übertragung des Wärmeinhaltes eines Kathodenabgases an den Reformer vorgesehen.

In einer weiteren Ausgestaltung ist im Abweg des Kathodenteils ein Abzweig zur Übertragung des Wärmeinhaltes eines Kathodenabgases an den Reformer vorgesehen.

Vorzugsweise ist der Abweg des Anodenteils zur Übertragung des Wärmeinhaltes eines Anodenabgases an den externen Reformer vorgesehen.

Zur weiteren Erläuterung der Erfindung wird auf die Ausführungsbeispiele der Zeichnung verwiesen. Es zeigen:

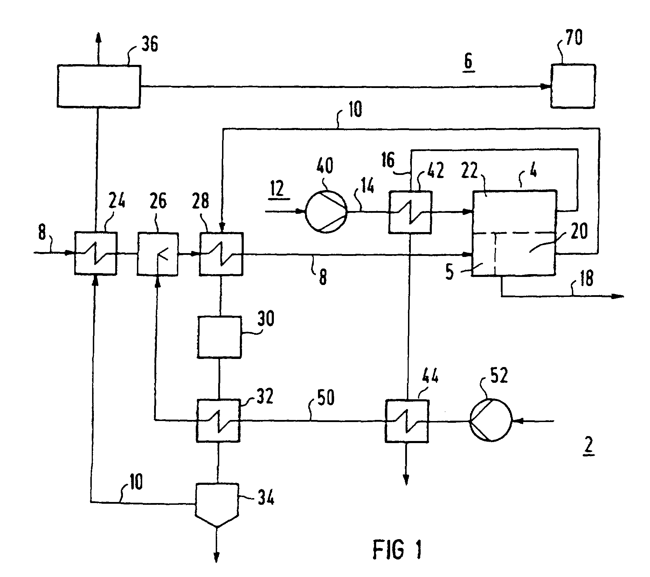

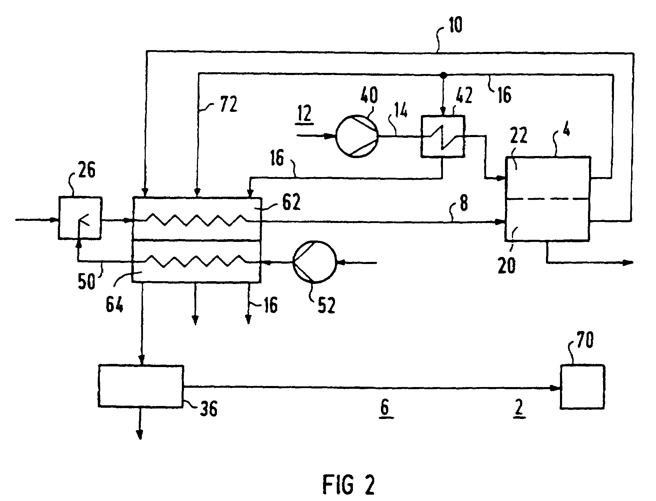

- FIG 1 und FIG 2: Hochtemperatur-Brennstoffzellenanlagen gemäß der Erfindung in schematischer Darstellung.

Gemäß FIG 1 umfaßt eine Hochtemperatur-Brennstoffzellenanlage 2 ein Hochtemperatur-Brennstoffzellenmodul 4 mit einem Reformer 5 zur Reformierung eines Brenngases für das Hochtemperatur-Brennstoffzellenmodul 4.

Das Hochtemperatur-Brennstoffzellenmodul 4 umfaßt einen Anoden- 20 und einen Kathodenteil 22. Der Reformer 5 ist dabei in den Anodenteil 20 integriert. In einer nicht dargestellten Ausführungsform befindet sich der Reformer 5 außerhalb des Anodenteils 20 aber innerhalb des Hochtemperatur-Brennstoffzellenmoduls 4.

Außerdem umfaßt die Hochtemperatur-Brennstoffzellenanlage 2 einen Anodenweg 6, der wiederum einen Zuweg 8 zum Anodenteil 20 des Hochtemperatur-Brennstoffzellenmoduls 4 und einen Abweg 10 vom Anodenteil 20 des Hochtemperatur-Brennstoffzellenmoduls 4 umfaßt, und einen Kathodenweg 12, der einen Zuweg 14 zum Kathodenteil des Hochtemperatur-Brennstoffzellenmoduls 4 und einen Abweg 16 vom Kathodenteil des Hochtemperatur-Brennstoffzellenmoduls 4 umfaßt.

Ein kohlenwasserstoffhaltiger Brennstoff wird über den Zuweg 8 des Anodenweges 6 in den Reformer 5 des Hochtemperatur-Brennstoffzellenmoduls 4 eingespeist und reformiert. Das bei der Reformierung entstehende Brenngas wird anschließend in dem Hochtemperatur-Brennstoffzellenmodul 4 teilweise der elektrochemischen Reaktion unterzogen.

Bei der Reformierung in dem Reformer 5 wird mehr Brenngas reformiert als bei der elektrochemischen Reaktion in dem Hochtemperatur-Brennstoffzellenmodul 4 verbraucht wird. In Summe werden wenigstens 10 bis 30% der Brenngasleistung in Überschußwasserstoff H₂ umgesetzt, insbesondere bei Zellspannungen kleiner 0.8V. Die theoretische Obergrenze liegt beispielsweise bei der Reformierung von Methan bei 85 bis 55% bei Zellspannungen von 0.5 bis 0.8V. Dadurch wird ein Überschuß an Wasserstoff H₂ erzeugt,der über den Abweg 10 des Anodenweges 6 des Anodenteils 20 einer Vorrichtung 70 für eine weitere Verwendung zugeführt wird. Bei der Vorrichtung 70 kann es sich um einen Speicher oder einen Verbraucher handeln, der beispielsweise wiederum ein Bestandteil der gesamten Hochtemperatur-Brennstoffzellenanlage sein kann.

In dem Zuweg 8 sind in Durchflußrichtung der Reihenfolge nach ein Wärmetauscher 24, ein Wassereinspritzer 26 und ein weiterer Wärmetauscher 28 angeordnet. Der kohlenwasserstoffhaltige Brennstoff wird in den Wärmetauschern 24, 28 erwärmt und im Wassereinspritzer 26 mit Wasserdampf befeuchtet.

In dem Abweg 10 des Anodenteils 20 des Hochtemperatur-Brennstoffzellenmoduls 4 sind in Durchflußrichtung der Reihenfolge nach der Wärmetauscher 28, ein Shift-Reaktor 30, ein zusätzlicher Wärmetauscher 32, ein Wasserabscheider 34, der Wärmetauscher 24, eine Wasserstoffabtrennvorrichtung 36 und die Vorrichtung 70 angeordnet.

In dem Anodenabgas in dem Abweg 10 sind im wesentlichen Kohlenmonoxid CO, Wasserstoff H₂, Wasser H₂O und Kohlendioxid CO₂ enthalten. Der in dem Anodenabgas enthaltene Anteil an Kohlenmonoxid CO und Wasserstoff H₂ hat typischerweise mehr als 10 bis 30% des Heizwertes der dem Hochtemperatur-Brennstoffzellenmodul 4 mit dem Brennstoff über den Zuweg 8 zugeführten Kohlenwasserstoffe.

Das Anodenabgas in dem Abweg 10 des Anodenteils 20 überträgt einen Teil seines Wärmeinhaltes in dem Wärmetauscher 28 an den Brennstoff für den Anodenteil 20 in dem Zuweg 8 des Anodenweges 6. Dem Wassereinspritzer 26 in dem Zuweg 8 wird Wasser über eine Leitung 50 zugeführt.

In Durchflußrichtung des Wassers sind in der Leitung 50 eine Pumpe 52, ein weiterer Wärmetauscher 44 und der Wärmetauscher 32 angeordnet.

In dem Shift-Reaktor 30, der bevorzugt auch in die benachbarten Wärmetauscher 28, 32 integriert sein kann, wird ein Großteil des Kohlenmonoxids CO mit dem Wasser H₂O des Anodenabgases zu Kohlendioxid CO₂ und Wasserstoff H₂ umgewandelt. Eine Shiftreaktion für die Umwandlung von Kohlenmonoxid CO und Wasser H₂O zu Kohlendioxid CO₂ und Wasserstoff H₂ findet nicht nur in dem Shift-Reaktor 30 statt, sondern erfolgt teilweise auch auf der gesamten Länge des Abweges 10 des Anodenteils 20. Demzufolge dient der gesamte Abweg 10 des Anodenteils 20 zur Anreicherung von Wasserstoff H₂ aus dem Anodenabgas.

Anschließend überträgt das Anodenabgas in dem Wärmetauscher 32 einen weiteren Teil seines Wärmeinhalts an das Wasser in der Leitung 50.

Ein Anteil von Wasser wird in dem Wasserabscheider 34 aus dem Anodenabgas entfernt. Einen weiteren Anteil seines Warmeinhaltes überträgt das Anodenabgas in dem Wärmetauscher 24 an den Brennstoff in dem Zuweg 8 für den Anodenteil 20 des Hochtemperatur-Brennstoffzellenmoduls 4. In der Wasserstoffabtrennvorrichtung 36 werden alle neben dem Wasserstoff H₂ in dem Anodenabgas vorhandenen Komponenten abgetrennt, so daß in dem letzten Teil des Abweges 10 im wesentlichen nur noch der Wasserstoff H₂ vorhanden ist und anschließend der Vorrichtung 70 zugeführt wird.

Ein Oxidanz, beispielsweise Luft oder Sauerstoff, wird über den Zuweg 14 des Kathodenweges 12 dem Kathodenteil 22 des Hochtemperatur-Brennstoffzellenmoduls 4 zugeführt. In Durchflußrichtung sind in dem Zuweg 14 ein Verdichter 40 und ein Wärmetauscher 42 angeordnet. Das Oxidanz wird in dem Verdichter 40 komprimiert, wobei zusätzlich die notwendige Durchflußmenge an Oxidanz eingestellt werden kann, und anschließend in dem Wärmetauscher 42 erwärmt.

Nach erfolgter Reaktion in dem Kathodenteil 22 des Hochtemperatur-Brennstoffzellenmoduls 4 wird das Kathodenabgas über den Abweg 16 des Kathodenteils 22, in dem die Wärmetauscher 42, 44 angeordnet sind, der Außenluft zugeführt. In dem Wärmetauscher 42 überträgt das erwärmte Kathodenabgas des Kathodenteils 22 einen Teil seines Wärmeinhaltes an das Oxidanz in dem Zuweg 14 für den Kathodenteil 22.

Der Einsatz der Wärmetauscher 24, 28, 32, 42 und 44 bewirkt, daß der Wärmeinhalt des Kathoden- und Anodenabgases des Hochtemperatur-Brennstoffzellenmoduls 4 zur Brennstoff- und Oxidanzvorwärmung und damit zur Reformierung verwendet wird.

Gemäß der Hochtemperatur-Brennstoffzellenanlage 2 in Figur 2 ist in dem Zuweg 8 für den Anodenteil 20 in Durchflußrichtung hinter dem Wassereinspritzer 26 ein Reformer 62 außerhalb des Hochtemperatur-Brennstoffzellenmoduls 4 angeordnet. Die Wärmetauscher 24, 28 der Ausführungsform in Figur 1 entfallen. Im Gegensatz zu der Ausführungsform in Figur 1 wird das Brenngas nicht mehr innerhalb des Hochtemperatur-Brennstoffzellenmoduls 4 reformiert, sondern in dem externen Reformer 62, so daß das Brenngas bereits zumindest teilweise reformiert ist bevor es in den Anodenteil 20 eingespeist wird.

Das Abgas des Anodenteils 20 gibt über den Abweg 10 einen Teil seines Wärmeinhaltes an den Reformer 62 ab. Hinter dem Reformer 62 ist in dem Abweg 10 des Anodenteils 20 ein Verdampfer 64 angeordnet, in dem das Abgas einen weiteren Teil seines Wärmeinhaltes an den Wasserdampf zum Befeuchten des Brennstoffes für den Reformer 62 überträgt. Anschließend durchläuft das Abgas des Anodenteils 20 die Wasserstoffabtrennvorrichtung 36, wobei hinter der Wasserstoffabtrennvorrichtung 36 nur noch Wasserstoff H₂ in dem Anodenabgas vorhanden ist und der Vorrichtung 70 zugeführt wird.

Das Kathodenabgas wird über den Abweg 16 des Kathodenteils 22, in dem der Wärmetauscher 42 angeordnet ist, dem externen Reformer 62 zugeführt. Nach Abgabe eines Teiles seines Wärmeinhaltes zum Reformieren des Brenngases für den Anodenteil 20 durchläuft das Kathodenabgas den Verdampfer 64, wo ein weiterer Teil seines Wärmeinhaltes an das Wasser für die Befeuchtung des Brennstoffes für den Reformer 62 abgegeben wird. Anschließend wird das Kathodenabgas, das im wesentlichen Luft enthält, an die Außenluft abgegeben.

Aus dem Abweg 16 des Kathodenteils 22 zweigt ein Abzweig 72 zwischen dem Kathodenteil 22 und dem Wärmetauscher 42 ab. Der Abzweig 72 speist einen Teil des Kathodenabgases des Kathodenteils 22 zur Abgabe seines Wärmeinhaltes direkt in den externen Reformer 62 ein. Nachdem ein Teil seines Wärmeinhaltes abgegeben worden ist durchläuft dieser Anteil des Kathodenabgases den Verdampfer 64 und wird anschließend ebenfalls an die Außenluft abgegeben.

## Patentansprüche

1. Verfahren zum Betreiben einer Hochtemperatur-Brennstoffzellenanlage (2) mit einem Hochtemperatur-Brennstoffzellenmodul (4), bei dem der Wärmeinhalt aus der elektrochemischen Reaktion im Hochtemperatur-Brennstoffzellenmodul (4) im wesentlichen zur Erzeugung des für die elektrochemische Reaktion erforderlichen Wasserstoff, sowie für weiteren Wasserstoff, der für eine weitere Nutzung außerhalb des Hochtemperatur-Brennstoffzellenmoduls (4) vorgesehen ist, durch einen Reformierungsprozeß des Brenngases verwendet wird, wobei die Zellen des Hochtemperatur-Brennstoffzellenmoduls (4) jeweils mit einer Zellspannung kleiner 0,8 Volt betrieben werden

2. Verfahren nach Anspruch 1, bei dem die Zellen des Hochtemperatur-Brennstoffzellenmoduls jeweils mit einer Zellspannung zwischen 0,5 V und 0,7 V betrieben werden.

3. Verfahren nach Anspruch 1 oder 2, bei dem wenigstens 30% der Brenngasleistung zum Erzeugen des nicht verbrauchten Wasserstoffes (H₂) verwendet werden.

4. Verfahren nach einem der Ansprüche 1 bis 3, bei dem das Brenngas innerhalb des Hochtemperatur-Brennstoffzellenmoduls (4) reformiert wird.

5. Verfahren nach einem der Ansprüche 1 bis 3, bei dem das Brenngas vor dem Eintreten in das Hochtemperatur-Brennstoffzellenmodul (4) reformiert wird.

6. Hochtemperatur-Brennstoffzellenanlage (2) zur Durchführung des Verfahrens nach einem der Ansprüche 1 bis 5, die wenigstens ein Hochtemperatur-Brennstoffzellenmodul (4) mit einem Anodenteil (20), einem Kathodenteil (22), einen Reformer (5) zum Reformieren des Brenngases für die elektrochemische Reaktion und eine Wasserstoffabtrennvorrichtung (36) in einem Abweg (10) des Anodenteils (20), die zum Abtrennen von Wasserstoff aus dem Anodenabgas vorgesehen ist, umfaßt, bei der Mittel zur Zuleitung der im wesentlichen gesamten im Hochtemperatur-Brennstoffzellenmodul (4) erzeugten Wärme zum Reformer (5) vorgesehen sind, und der Reformer (5) dazu ausgelegt ist, mehr Wasserstoff zu erzeugen, als für die elektrochemische Reaktion gebraucht wird.

7. Hochtemperatur-Brennstoffzellenanlage (2) nach Anspruch 6, bei der eine Vorrichtung (70) in einem Abweg (10) des Anodenteils (20) als ein Speicher für den nicht im Hochtemperatur-Brennstoffzellenmodul (4) verbrauchten Wasserstoff vorgesehen ist.

8. Hochtemperatur-Brennstoffzellenanlage (2) nach Anspruch 6, bei der eine Vorrichtung (70) in einem Abweg (10) des Anodenteils (20) als ein Verbraucher für den nicht im Hochtemperatur-Brennstoffzellenmodul (4) verbrauchten Wasserstoff vorgesehen ist.

9. Hochtemperatur-Brennstoffzellenanlage (2) nach einem der Ansprüche 6 bis 8, bei der der Reformer (5) innerhalb des Hochtemperatur-Brennstoffzellenmoduls (4) angeordnet ist.

10. Hochtemperatur-Brennstoffzellenanlage (2) nach einem der Ansprüche 6 bis 9, bei der wenigstens ein Wärmetauscher ( 24, 28, 32) in dem Abweg (10) des Anodenteils (20) zur Übertragung des Wärmeinhaltes eines Anodenabgases über einen Zuweg (8) an den innerhalb des Hochtemperatur-Brennstoffzellenmoduls (4) angeordneten Reformer (5) vorgesehen ist.

11. Hochtemperatur-Brennstoffzellenanlage (2) nach einem der Ansprüche 6 bis 10, bei der ein Shift-Reaktor (30) zur Erzeugung von Wasserstoff (H₂) im Abweg (10) des Anodenteils (20) angeordnet ist.

12. Hochtemperatur-Brennstoffzellenanlage (2) nach Anspruch 11, bei der der Shift-Reaktor (30) zwischen den beiden Wärmetauschern (28, 32) im Abweg (10) des Anodenteils (20) angeordnet ist.

13. Hochtemperatur-Brennstoffzellenanlage (2) nach einem der Ansprüche 6 bis 12, bei der wenigstens ein Wärmetauscher (42, 44) in einem Abweg (16) des Kathodenteils (22) zur Abgabe des Wärmeinhaltes eines Kathodenabgases vorgesehen ist.

14. Hochtemperatur-Brennstoffzellenanlage (2) nach einem der Ansprüche 6 bis 8, bei der ein Reformer (62) außerhalb des Hochtemperatur-Brennstoffzellenmoduls (4) in einem Zuweg (8) für den Anodenteil (20) angeordnet ist.

15. Hochtemperatur-Brennstoffzellenanlage (2) nach Anspruch 14, bei der der Abweg (16) des Kathodenteils (22) zur Übertragung des Wärmeinhaltes eines Kathodenabgases an den Reformer (62) vorgesehen ist.

16. Hochtemperatur-Brennstoffzellenanlage (2) nach Anspruch 15, bei der im Abweg (16) des Kathodenteils (22) ein Abzweig (72) zur Übertragung des Wärmeinhaltes eines Kathodenabgases an den Reformer (62) vorgesehen ist.

17. Hochtemperatur-Brennstoffzellenanlage (2) nach Anspruch 14, bei der der Abweg (10) des Anodenteils (20) zur Übertragung des Wärmeinhaltes eines Anodenabgases an den Reformer (62) vorgesehen ist.

## Claims

1. Method for operating a high-temperature fuel cell installation (2) having a high-temperature fuel cell module (4), in which a reforming processes uses the heat content from the electrochemical reaction in the high-temperature fuel cell module (4) principally to generate the hydrogen required for the electrochemical reaction, and also for further hydrogen which is provided for a further use outside the high-temperature fuel cell module (4), the cells of the high-temperature fuel cell module (4) each being operated with a cell voltage of less than 0.8V.

2. Method according to claim 1, in which the cells of the high-temperature fuel cell module are each operated with a cell voltage of between 0.5V and 0.7V.

3. Method according to claim 1 or 2, in which at least 30% of the combustion gas power is used to generate the hydrogen (H₂) which is not consumed.

4. Method according to one of claims 1 to 3, in which the combustion gas is reformed inside the high-temperature fuel cell module (4).

5. Method according to one of claims 1 to 3, in which the combustion gas is reformed before entry into the high-temperature fuel cell module (4).

6. High-temperature fuel cell installation (2) for carrying out the method according to one of claims 1 to 5, which comprises at least one high-temperature fuel cell module (4) having an anode portion (20), a cathode portion (22), a reformer (5) for reforming the combustion gas for the electrochemical reaction and a hydrogen separating device (36) in a discharge path (10) of the anode portion (20), which hydrogen separating device is provided for separating hydrogen out of the anode exhaust gas, in which high-temperature fuel cell installation are provided means for supplying substantially the entire heat generated in the high-temperature fuel cell module (4) to the reformer (5), and the reformer (5) is designed to generate more hydrogen than is needed for the electrochemical reaction.

7. High-temperature fuel cell installation (2) according to claim 6, in which a device (70) is provided in a discharge path (10) of the anode portion (20) as a reservoir for the hydrogen which is not consumed in the high-temperature fuel cell module (4).

8. High-temperature fuel cell installation (2) according to claim 6, in which a device (70) is provided in a discharge path (10) of the anode portion (20) as a consumer for the hydrogen which is not consumed in the high-temperature fuel cell module (4).

9. High-temperature fuel cell installation (2) according to one of claims 6 to 8, in which the reformer (5) is arranged inside the high-temperature fuel cell module (4).

10. High-temperature fuel cell installation (2) according to one of claims 6 to 9, in which at least one heat exchanger (24, 28, 32) is provided in the discharge path (10) of the anode portion (20) for transferring the heat content of an anode exhaust gas by way of a feed path (8) to the reformer (5) arranged inside the high-temperature fuel cell module (4).

11. High-temperature fuel cell installation (2) according to one of claims 6 to 10, in which a shift reactor (30) for generating hydrogen (H₂) is arranged in the discharge path (10) of the anode portion (20).

12. High-temperature fuel cell installation (2) according to claim 11, in which the shift reactor (30) is arranged between the two heat exchangers (28, 32) in the discharge path (10) of the anode portion (20).

13. High-temperature fuel cell installation (2) according to one of claims 6 to 12, in which at least one heat exchanger (42, 44) is provided in a discharge path (16) of the cathode portion (22) for delivering the heat content of a cathode exhaust gas.

14. High-temperature fuel cell installation (2) according to one of claims 6 to 8, in which a reformer (62) is arranged outside the high-temperature fuel cell module (4) in a feed path (8) for the anode portion (20).

15. High-temperature fuel cell installation (2) according to claim 14, in which the discharge path (16) of the cathode portion (22) is provided for transferring the heat content of a cathode exhaust gas to the reformer (62).

16. High-temperature fuel cell installation (2) according to claim 15, in which there is provided in the discharge path (16) of the cathode portion (22) a discharge branch (72) for transferring the heat content of a cathode exhaust gas to the reformer (62).

17. High-temperature fuel cell installation (2) according to claim 14, in which the discharge path (10) of the anode portion (20) is provided for transferring the heat content of an anode exhaust gas to the reformer (62).

## Revendications

1. Procédé pour faire fonctionner une installation (2) de pile à combustible à haute température comprenant un module (4) de pile à combustible à haute température, qui consiste à utiliser l'enthalpie de la réaction électrochimique dans le module (4) de pile à combustible à haute température essentiellement pour la production de l'hydrogène nécessaire à la réaction électrochimique ainsi que pour de l'hydrogène supplémentaire qui est prévu en vue d'être utilisé en dehors du module (4) de pile à combustible à haute température par une opération de reformage, les piles du module (4) de pile à combustible à haute température fonctionnant chacune sous une tension de pile inférieure à 0,8 Volt.

2. Procédé suivant la revendication 1 qui consiste à faire fonctionner les piles du module de pile à combustible à haute température respectivement à une tension de pile comprise entre 0,5 V et 0,7 V.

3. Procédé suivant la revendication 1 ou 2 qui consiste à utiliser au moins 30% de la puissance du gaz combustible pour la production de l'hydrogène (H₂) qui n'est pas consommé.

4. Procédé suivant l'une des revendications 1 à 3, qui consiste à reformer le gaz combustible dans le module (4) de pile à combustible à haute température.

5. Procédé suivant l'une des revendications 1 à 3, qui consiste à reformer le gaz combustible avant l'entrée dans le module (4) de pile à combustible à haute température.

6. Installation (2) de pile à combustible à haute température pour la mise en oeuvre du procédé suivant l'une des revendications 1 à 5, qui comprend au moins un module (4) de pile à combustible à haute température ayant une partie (20) anodique, une partie (22) cathodique, un reformeur (5) pour le reformage du gaz combustible pour la réaction électrochimique et, dans un trajet (10) de sortie de la partie (20) anodique, un dispositif (36) de séparation de l'hydrogène qui est prévu pour séparer l'hydrogène du gaz qui sort de l'anode, dans laquelle il est prévu des moyens pour envoyer au reformeur (5) sensiblement toute la chaleur produite dans le module (4) de pile à combustible à haute température et le reformeur (5) est conçu pour produire plus d'hydrogène qu'on en a besoin pour la réaction électrochimique.

7. Installation (2) de pile à combustible à haute température suivant la revendication 6, dans laquelle il est prévu un dispositif (70) dans un trajet (10) de sortie de la partie (20) anodique en tant que réservoir de l'hydrogène non consommé dans le module (4) de pile à combustible à haute température.

8. Installation (2) de pile à combustible suivant la revendication 6, dans laquelle il est prévu un dispositif (70) dans un trajet (10) de sortie de la partie (20) anodique en tant que dispositif consommateur de l'hydrogène qui n'a pas été consommé dans le module (4) de pile à combustible à haute température.

9. Installation (2) de pile à combustible suivant l'une des revendications 6 à 8, dans laquelle le reformeur (5) est monté dans le module (4) de pile à combustible à haute température.

10. Installation (2) de pile à combustible suivant l'une des revendications 6 à 9, dans laquelle il est prévu au moins un échangeur de chaleur (24,28,32) dans le trajet (10) de sortie de la partie (20) anodique pour transférer l'enthalpie d'un gaz qui sort de l'anode en passant par un trajet (8) d'entrée au reformeur (5) monté dans le module (4) de pile à combustible à haute température.

11. Installation (2) de pile à combustible suivant l'une des revendications 6 à 10, dans laquelle il est monté un réacteur (30) de conversion pour la production d'hydrogène (H₂) dans le trajet (10) de sortie de la partie (20) anodique.

12. Installation (2) de pile à combustible suivant la revendication 11, dans laquelle le réacteur (30) de conversion est monté entre les deux échangeurs de chaleur (28,32) dans le trajet (10) de sortie de la partie (20) anodique.

13. Installation (2) de pile à combustible suivant l'une des revendications 6 à 12, dans laquelle il est prévu au moins un échangeur de chaleur (42,44) dans un trajet (16) de sortie de la partie (22) cathodique pour céder l'enthalpie d'un gaz qui sort de la cathode.

14. Installation (2) de pile à combustible suivant l'une des revendications 6 à 8, dans laquelle il est monté un reformeur (62) à l'extérieur du module (4) de pile à combustible à haute température dans un trajet (8) d'entrée pour la partie (20) anodique.

15. Installation (2) de pile à combustible suivant la revendication 14, dans laquelle le trajet (16) de sortie de la partie (22) cathodique est prévu pour le transfert de l'enthalpie d'un gaz qui sort de la cathode au reformeur (62).

16. Installation (2) de pile à combustible suivant la revendication 15, dans laquelle dans le trajet (16) de sortie de la partie (22) cathodique il est prévu une dérivation (72) pour le transfert de l'enthalpie d'un gaz qui sort de la cathode au reformeur (62).

17. Installation (2) de pile à combustible suivant la revendication 14, dans laquelle le trajet (10) de sortie de la partie (20) anodique est prévu pour le transfert de l'enthalpie d'un gaz qui sort de l'anode au reformeur (62).
